# EUROPEAN PATENT SPECIFICATION

(11) **EP 0 774 347 B1**
(45) Date of publication and mention of the grant of the patent: **16.04.2003**
(21) Application number: 96308338.1
(22) Date of filing: 15.11.1996
(51) Int. Cl.: B32B 27/18, B32B 27/32

(54) **Polymeric films**
Polymerfilme
Films en polymère

(30) Priority: 15.11.1995 GB 9523350
(43) Date of publication of application: 21.05.1997
(73) Proprietor: Trespaphan GmbH, 66539 Neunkirchen (DE)
(72) Inventor: Alder, Paul Thomas, Swindon, Wiltshire SN2 4BG (GB)
(74) Representative: Luderschmidt, Schüler & Partner GbR

(56) References cited:
- WO-A-96/18497
- GB-A- 2 296 889
- US-A- 5 443 915
- US-A- 5 489 473

## Description

This invention concerns polymeric films, and in particular polypropylene films, having good slip characteristics combined with printability.

It is known in the polypropylene film art to modify the slip characteristics of such films by a variety of methods. One such method is to incorporate into the films one or more additives in a core layer of the films, the additives being such that they migrate from the core layer through outer film layers so that they form a surface layer on the outer layers of the films. Typical of such additives are fatty acid amides and glyceryl esters of long chain fatty acids.

Polyolefin films containing migratory additives can in general be printed, especially if the surface of the films to be printed is subjected to a treatment which increases the surface energy of the films, such methods being well known in the polypropylene film art.

However, one major disadvantage of using migratory additives to modify the slip characteristics of polypropylene films is that the slip characteristics tend to change with time. Thus immediately after the films have been manufactured, when little or no slip additive has migrated to the film surface, the films have relatively poor slip properties, whereas after storage of the films for some time, the films can become excessively slippery with consequent difficulties in using the films in packaging machinery. Furthermore, increasing amounts of migrated additives on the film surface over a period of time can reduce the optical properties of the films.

An alternative approach to the problem of modifying the slip characteristics of polypropylene films has been to include non-migratory slip agents in the outer surfaces of such films. Whilst the antiblock agents which are usually included in the outer surface layers of polypropylene films do modify the inherently poor slip properties of the polymers of which the outer surfaces are made, such agents generally cannot be used alone to provide the degree of slip which is required for such films. Hence the use of migratory separate slip agents.

Alternatively, a slip agent can be coated on to the outer surface of the films rather than incorporating it within the body of the film.

Silicones, and in particular polydiorganosiloxanes, have frequently been proposed hitherto as slip-imparting, non-migratory slip additives for adding to the outer layers of polypropylene films. They have also been used as slip imparting coatings which are applied to the outer surfaces of polypropylene films.

The use of these materials has the advantage that the slip properties of the films in general do not change with time, their slip properties being substantially constant from manufacture and throughout storage over substantial periods of time. One major disadvantage of using silicones to modify the slip characteristics of the films is that they tend to reduce the printability of the films, especially when using water-based inks. Furthermore, treatment of films to improve their surface energy, and hence their printability, cannot in general be used on film surfaces which contain compounded silicone or have a silicone coating, as the treatment tends to have a highly adverse effect on the silicone, for example leading to a reduction in the slip characteristics of the film surface and/or the heat sealability of the film surface when such a surface is otherwise heat sealable.

According to the present invention there is provided a biaxially oriented polyolefin film as defined by claim 1.

Films in accordance with the present invention have shown good slip properties from manufacture, such properties being achieved with much less of a change in the slip properties over a period of time. Furthermore, a particularly good control of slip properties can be achieved compared with films which use a silicone in an outer layer instead of a migratory fatty acid amide as a slip agent. In addition to these advantages, films in accordance with the present invention have shown good optical properties and good machinability. These properties have also been observed in combination with good printability, especially with water-based inks.

The base layer is formed from a propylene polymer which is preferably a propylene homopolymer or a polymer of propylene and a minor amount, preferably less than 2wt%, of a comonomer, for example ethylene.

The amount of fatty acid amide in the base layer is preferably not more than 5000ppm based on the weight of the layer, as higher amounts can adversely affect the ability of the outer layer to heat seal under low pressures when it is of a heat sealable polymer. Advantageously, the amount of fatty acid amide in the outer layer is less than 4000ppm, and more especially from 1000 to 3750ppm based on the weight of the base layer. If the amount of fatty acid amide is reduced excessively, the beneficial effects of its presence may not be observed.

Fatty acid amides, and derivatives thereof, which can be used as slip agent in the base layer of films in accordance with the present invention include amides of C₁₀₋₄₀ fatty acids and of the corresponding hydroxy fatty acids, and derivatives thereof, for example erucamide, oleamide, ethylene bis-stearamide, stearyl erucamide, and oleyl palmitamide. Mixtures of two or more fatty acid amides or their derivatives can also be used.

The base layer can also contain one or more known migratory anti-static agents. Examples of such agents are bis-(hydroxyalkyl)-(C₁₀₋₂₀)alkylamines, preferably derived from an alkylamine containing from 12 to 18 carbon atoms, the hydroxyalkyl group of such compounds preferably being a 2-hydroxyethyl group. An example of a specific antistatic agent which can be used in the base layer is bis-(2-hydroxyethyl)-tallow amine.

The amount of migratory antistatic agent used in the base layer is preferably from 0.01 to 0.20.wt% of the base layer.

Other migratory additives which can be included in the base layer include glyceryl esters of fatty acids, although the presence of these esters is generally not preferred since they can adversely affect the optical properties of the films.

Examples of such esters which can be used include glyceryl monostearate, glycerides of behenic acid, and glycerides of hydroxy-fatty acids, for example glyceryl tri-(12-hydroxy)stearate.

The outer layer is preferably formed from a polyolefin which is or can be rendered printable, for example by a suitable surface treatment. The outer layer is also preferably heat sealable. Examples of polyolefins which can be used to form the outer layer include copolymers of propylene with at least one of ethylene and butene-1, e.g. propylene/ethylene copolymers and propylene/ethylene/butene-1 terpolymers. The outer layer can also be formed from a blend of two or more olefin polymers.

The said outer layer of films of the present invention contains a blend of a cross-linked silicone antiblock agent and an inorganic antiblock agent. The total amount of these two types of antiblock agent present in the outer layer, based on the weight of the outer layer, is preferably not more than 5000ppm, higher amounts tending to reduce the heat sealability of the outer layer when such is made of a heat sealable polymer. The total amount of these antiblock agents is preferably less than 4000ppm based on the weight of the outer layer, and more preferably from 1000 to 3750ppm. If insufficient antiblock agent is present, the films will exhibit blocking.

It is generally preferred that the mixture of antiblock agents in the outer layer contains from 25 to 75 wt%, preferably from 40 to 60wt%, of cross-linked silicone, and from 75 to 25wt%, preferably from 60 to 40wt%, of an inorganic antiblock agent.

The cross-linked silicone antiblock agent is preferably as described in EP0242055-A. The inorganic antiblock agent can be selected from antiblock agents proposed hitherto in the polypropylene film art, for example silica, and silicates.

The mean particle size of each antiblock agent will usually be in the range of from 1 to 6µm. In general, the relative sizes of the two different types of antiblock agent is not significant to achieving the effect achieved by the present invention, and one antiblock agent can therefore have a relatively small mean particle size whilst the other has a relatively large mean particle size. However, if the mean particle sizes of the two types of antiblock agent are of significantly different, adverse effects caused by such differences can be reduced by adjusting the amount of fatty acid amide in the base layer as this can reduce the effects of such differences in mean particle size.

Films in accordance with the present invention can consist merely of the two specified layers. However, it is generally preferred that the base layer has a further layer thereon remote from the specified outer layer, thereby making the films three-layer. Further layers can also be present, for example between the specified outer layer and the base layer, or between the base layer and ant further layer or layers on the side of the base layer remote from the specified outer layer.

The further outer layer is preferably of an olefin polymer, for example of the same composition as the specified outer layer. However, it is preferably of a different composition from that of the particularly specified outer layer since this can enable differential slip properties to be achieved between the outer surfaces of the films even if the two outer layers contain substantially identical blends of a cross-linked silicone antiblock agent and an inorganic antiblock agent. Particularly preferred films in accordance with the present invention have one outer surface formed from a propylene/ethylene copolymer with the other surface formed from a blend of a propylene/ethylene copolymer and a propylene/ethylene/butene-1 terpolymer. Such films have shown differential slip which makes them of particular advantage in overwrapping articles where film to article slip is desirably lower than film to film slip for the overwrapped articles.

It is generally preferred not to add a fatty acid amide in the outer layer or layers of films of the present invention, other than that which may of necessity be present as a dispersing agent for the antiblock agents which are included in these layers.

The outer layer or layers of films of the present invention can include an antistatic agent, preferably an alkyl sulfonate.

It is generally preferred to subject the outer layer containing the blend of cross-linked silicone antiblock agent and the inorganic antiblock agent to a treatment which increases its surface energy, for example corona discharge treatment or flame treatment.

If desired, one or more layers of films of the present invention can include organic or inorganic particles which induce the formation of microvoids when they are biaxially stretched. In general, the voided layer will be the base layer, but other layers which may be present which can be voided, these normally being those consisting of a propylene polymer with substantially all units derived from propylene. Examples of particulate materials which can be used to induce voiding include polyamides, for example nylons, polyesters, for example polyethylene terephthalate and polybutylene terephthalate, chalk, talc, barium sulfate and zinc sulfide. In general these particulate materials should have a mean particle size of from 1 to 10µm in order to effect voiding.

Any of the various layers of films of the present invention can, if desired, contain a pigment, for example titanium dioxide.

Films in accordance with the present invention can be produced by known methods, for example by coextrusion of the base layer and the specified outer layer, and with any further layers which are desired, and then biaxially stretching the coextrudate. The biaxial stretching can be effected simultaneously in the direction of extrusion and in the transverse direction using the so-called bubble process. However, it is preferred to effect the stretching sequentially by first stretching the web in the direction of extrusion and then in the transverse direction.

Sequential stretching is particularly preferred when it is desired to make films having one or more layers which include microvoids.

The following Example is given by way of illustration only.

### Example

A three layer polymer web was produced by coextruding a base layer of propylene homopolymer containing 0.07wt% of bis-ethoxylated amine and 0.16wt% of erucamide with a first outer layer forming composition on one surface of the base layer and a second outer layer forming composition on the other surface thereof. The first outer layer forming composition consisted of a propylene/ethylene copolymer (4.7wt% ethylene) containing 0.15wt% of a cross-linked silicone (Tospearl 120, ex GE Silicones - mean particle size 2µm) and 0.165wt% of silica with a mean particle size of 4µm. The second outer layer forming composition consisted of a blend of 40wt% of the propylene/ethylene copolymer used for the first layer with 60wt% of a copolymer of propylene (83wt%), ethylene (2wt%) and butene-1 (15wt%), the blend including 0.15wt% of a cross-linked silicone (Tospearl 145, ex GE Silicones - mean particle size 4.5µm) and 0.20wt% of silica with a mean particle size of 4µm.

The coextruded three layer web was then stretched 4.5 times in the direction of extrusion by passing it over a series of rollers at 120°C rotating at differential peripheral speeds, and then 10 times in the transverse direction in a stenter oven at 160°C.

The first outer layer of the biaxially stretched film was then subjected to corona discharge treatment, and the film was finally wound up.

The film had good slip properties and the treated surface was printable.

## Claims

1. A biaxially oriented polyolefin film comprising a base layer comprising a propylene polymer with an outer, printable layer thereon, the base layer containing at least one fatty acid amide in an amount of at least 1000 ppm and the outer layer including a blend of a cross linked silicone antiblock agent and an inorganic antiblock agent, wherein the outer layer is formed from a polyolefin or from a blend of two or more olefin polymers.

2. A film according claim 1, wherein the base layer contains not more than 5000ppm by weight of the fatty acid amide.

3. A film according to any of the preceding claims, wherein the outer layer contains at least 1000ppm by weight of the blend of antiblock agents.

4. A film according to any of the preceding claims, wherein the outer layer contains not more than 5000ppm by weight of the blend of antiblock agents.

5. A film according to any of the preceding claims, wherein the outer layer contains from 1000 to 3750ppm by weight of the blend of antiblock agents.

6. A film according to any of the preceding claims, wherein the blend of antiblock agents in the outer layer contains from 25 to 75wt% of the cross-linked silicone antiblock agent and from 75 to 25wt% of inorganic antiblock agent.

7. A film according to claim 6, wherein the blend of antiblock agents in the outer layer contains from 40 to 60wt% of the cross-linked silicone antiblock agent and from 60 to 40wt% of inorganic antiblock agent.

8. A film according to any of the preceding claims, wherein the mean particle size of the respective antiblock agents in the outer layer is from 1 to 6µm.

9. A film according to any of the preceding claims, having at least one further polymeric layer on the base layer remote from said outer layer.

## Patentansprüche

1. Biaxial orientierte Polyolefinfolie, umfassend eine Grundschicht aus einem Propylenpolymer mit einer bedruckbaren Außenschicht darüber, wobei die Grundschicht mindestens ein Fettsäureamid in einer Menge von mindestens 1000 ppm und die Außenschicht ein Gemisch aus einem vernetzten Siliconantiblockmittel und einem anorganischen Antiblockmittel enthält und wobei die Außenschicht aus einem Polyolefin oder aus einem Gemisch aus zwei oder mehreren Olefinpolymeren gebildet wird.

2. Folie gemäß Anspruch 1, wobei die Grundschicht höchstens 5000 ppm (Gewichtsanteile) Fettsäureamid enthält.

3. Folie gemäß einem der vorausgehenden Ansprüche, wobei die Außenschicht mindestens 1000 ppm (Gewichtsanteile) des Antiblockmittelgemisches enthält.

4. Folie gemäß einem der vorausgehenden Ansprüche, wobei die Außenschicht höchstens 5000 ppm (Gewichtsanteile) des Antiblockmittelgemisches enthält.

5. Folie gemäß einem der vorausgehenden Ansprüche, wobei die Außenschicht 1000 - 3750 ppm (Gewichtsanteile) des Antiblockmittelgemisches enthält.

6. Folie gemäß einem der vorausgehenden Ansprüche, wobei das Antiblockmittelgemisch in der Außenschicht 25 - 75 Gewichtsprozent vernetztes Siliconantiblockmittel und 75 - 25 Gewichtsprozent anorganisches Antiblockmittel enthält.

7. Folie gemäß Anspruch 6, wobei das Antiblockmittelgemisch in der.Außenschicht 40 - 60 Gewichtsprozent vernetztes Siliconantiblockmittel und 60 - 40 Gewichtsprozent anorganisches Antiblockmittel enthält.

8. Folie gemäß einem der vorausgehenden Ansprüche, wobei die mittlere Teilchengröße der jeweiligen Antiblockmittel in der Außenschicht 1 - 6 µm beträgt.

9. Folie gemäß einem der vorausgehenden Ansprüche mit mindestens einer weiteren Polymerschicht auf der Grundschicht, wobei sich diese Polymerschicht auf der der genannten Außenschicht gegenüberliegenden Seite befindet.

## Revendications

1. Film de polyoléfine à orientation biaxiale comprenant une couche de base en un polymère de propylène avec une couche externe imprimable au-dessus, la couche de base contenant au moins un amide d'acide gras dans une quantité d'au moins 1000 ppm et la couche externe un mélange d'un agent anti blocking aux silicones réticulé et d'un agent anti blocking inorganique, la couche externe étant constituée d'un polyoléfine ou d'un mélange de deux ou de plusieurs polymères d'oléfines.

2. Film selon la revendication 1, la couche de base contenant au plus 5000 ppm en poids d'amide d'acide gras.

3. Film selon l'une des revendications ci-avant, la couche externe contenant au moins 1000 ppm en poids du mélange d'agents anti blocking.

4. Film selon l'une des revendications ci-avant, la couche externe contenant au plus 5000 ppm en poids du mélange d'agents anti blocking.

5. Film selon l'une des revendications ci-avant, la couche externe contenant 1000 à 3750 ppm en poids du mélange d'agents anti blocking.

6. Film selon l'une des revendications ci-avant, le mélange d'agents anti blocking dans la couche externe contenant 25 à 75 % en poids d'agent anti blocking aux silicones réticulé et 75 à 25 % en poids d'agent antiblocking inorganique.

7. Film selon la revendication 6, le mélange d'agents anti blocking dans la couche externe contenant 40 à 60 % en poids d'agent anti blocking aux silicones réticulé et 60 à 40 % en poids d'agent anti blocking inorganique.

8. Film selon l'une dès revendications ci-avant, la taille moyenne des particules des agents anti blocking respectifs de la couche externe étant de 1 à 6 µm.

9. Film selon l'une des revendications ci-avant avec au moins une autre couche polymère sur la couche de base, cette couche polymère se trouvant sur le côté opposé à la couche externe.
